## Europäisches Patentamt
## European Patent Office
## Office européen des brevets

(19)

(11) Veröffentlichungsnummer: **0 183 153**
**B1**

(12) **EUROPÄISCHE PATENTSCHRIFT**

(45) Veröffentlichungstag der Patentschrift: 20.06.90

(51) Int. Cl.⁵: **B 29 C 47/24,** B 22 C 13/00

(21) Anmeldenummer: **85114571.4**

(22) Anmeldetag: **16.11.85**

(54) Verfahren zur Herstellung einer künstlichen, unregelmässig geformten Wursthülle aus Kollagen und Vorrichtung zur Durchführung des Verfahrens.

(30) Priorität: **23.11.84 DE 3442712**

(43) Veröffentlichungstag der Anmeldung:
**04.06.86 Patentblatt 86/23**

(45) Bekanntmachung des Hinweises auf die
Patenterteilung:
**20.06.90 Patentblatt 90/25**

(84) Benannte Vertragsstaaten:
**AT CH DE FR IT LI**

(56) Entgegenhaltungen:
**BE-A- 649 396**
**CH-A- 335 930**
**DE-A-1 938 720**
**DE-C- 671 490**
**FR-A- 812 048**
**GB-A- 618 536**
**GB-A-1 159 453**
**US-A-3 613 162**

(73) Patentinhaber: **NATURIN-WERK Becker & Co.**
**Postfach 1540**
**D-6940 Weinheim/Bergstrasse (DE)**

(72) Erfinder: **Winkler, Bruno**
**Am Hummelberg 7**
**D-6940 Weinheim/Bergstrasse (DE)**
Erfinder: **Kaluza, Ludwig, Dipl.-Ing.**
**Beundstrasse 34**
**D-6940 Weinheim/Bergstrasse (DE)**

(74) Vertreter: **Klöpsch, Gerald, Dr.-Ing.**
**An Gross St. Martin 6**
**D-5000 Köln 1 (DE)**

Courier Press, Leamington Spa, England.

## Beschreibung

Die Erfindung betrifft ein Verfahren zur Herstellung einer künstlichen, unregelmäßig geformten Wursthülle aus Kollagen, sowie eine Vorrichtung zur Durchführung des Verfahrens. Insbesondere betrifft die Erfindung die Herstellung einer künstlichen Wursthülle aus Kollagen, die eine korkenzieherartige Wendelung ihrer Längsachse um eine gedachte Mittelachse oder/und die bei an sich gerader Form der Hülle einen in Längsrichtung veränderlichen Durchmesser aufweist.

Zur Verwendung als Wursthülle wurden für den tierischen Darm schon viele Substitutionsprodukte vorgeschlagen. Bekannt sind künstliche Wursthüllen aus Papier, Pergament oder Nesselgewebe, aus chemisch und mechanisch umgewandelten Naturstoffen wie Cellulose, Alginat, Sojaeiweiß oder Kollagen und aus thermoplastichen kunststoffen wie Polyvinylidenchlorid oder Polyamid.

Im allgemeinen bestehen all diese künstlichen Wursthüllen aus geraden Schläuchen, die zur Herstellung von Würsten abgelängt werden. Es werden aber auch Sonderformen angeboten, die die Form aller möglichen tierischen Organe nachahmen, die als natüraliche Wursthüllen seit langem Verwendung finden, z.B. Kranzdärme, krause Därme, Buttdärme, Enddärme, Fettenden, Mägen, Blasen und Hammelklappen. Solche Organe, die als natürliche Wursthüllen verwendet werden, haben üblicherweise eine unregelmäßige Form, d.h. sie weichen mehr oder weniger stark von der Form eines geraden Zylinders ab. Abweichungen können, wie z.B. beim Dickdarm des Schweins, der sogenannten Schweinekrause darin bestehen, daß bei an sich gerader Form des Darms der Durchmesser über die Darmlänge variiert, d.h. Teile größeren mit Teilen kleineren Durchmessers alternieren, üblicherweise werden diese Sonderformen aus flachgelegten großkalibrigen Schläuchen durch Nähen hergestellt. Die dabei erhaltene Form stellt meistens nur einen Anklang an das Original dar.

Von den wenigen Versuchen zur maschinellen kontinuierlichen Herstellung solcher Sonderformen ist am längsten der Kollagen-Kranzdarm bekannt, der in der Form einer endlosen Wendel extrudiert und getrocknet wird. Inzwischen werden künstliche Kranzdärme auch aus Polyamid und Polyvinylidenchlorid hergestellt. Mit Wurstbrät gefüllt, sind zumindest die künstlichen Kollagen-Kranzdärme von einem natürlichen Schweinekranzdarm kaum zu unterscheiden.

In der DE—PS 671 490 ist eine Vorrichtung zum Herstellen von insbesondere als künstliche Wursthüllen verwendbaren schlauchförmigen Gebilden durch Pressen von aus tierischen oder pflanzlichen Ausgangsstoffen gewonnenen Massen, insbesondere tierischen Fasermassen, durch Ringdüsen beschrieben. Kern und Mantel der Ringdüse laufen am Austrittsende entgegengesetzt zueinander um. Mit dieser Vorrichtung wird erreicht, daß die beim Durchgang durch den feststehenden Düsenteil gerichteten Fasern durch die vorgesetzte Düse mit beweglichem Mantel und entgegengesetzt umlaufendem Kern in eine verschränkte Lage gegeneinander gebracht werden und der Schlauch mit den gesperrt liegenden Fasern unmittelbar aus der Düse austritt. Man erhält so eine hohe Festigkeit des austretenden Schlauches.

Die Aufgabe der Erfindung ist gegenüber diesem Stand der Technik darin zu sehen, eine maschinell und kontinuierlich herstellbare künstliche Wursthülle aus Kollagen zu schuffen, die von der regelmäßigen geraden zylindrischen Form abweicht. Eine solche Hülle wäre wegen ihrer Gas- und Wasserdampfdurchlässigkeit und ihrer Fettdichtheit zur Herstellung von Rohwurst und geräucherter Blutwurst besonders geeignet, kann aber ebenso zur Herstellung von Brüh- und Kochwurst, z.B., Leberwurst, verwendent werden.

Die Lösung diesen Aufgabe erfolgt durch das im kennzeichnenden Teil des Patentanspruchs 1 angegebene Verfahren und durch die im kennzeichnenden Teil des Patenanspruchs 8 angegebenen Maßnahmen zur Durchführung des Verfahrens.

Der Abstand der Längsachse der Kollagenwursthülle von einer gedachten Mittelachse, d.h. die Wendelhöhe kann von 0 bis maximal einen Funftel ihres mittleren Durchmessers betragen, und liegt vorzugsweise bei etwa einem Sechstel und insbesondere bei einem Siebentel ihres Durchmessers. Die Steigung der Wendelung entspricht dabei dem 0,5 bis 3-fachen und vorzugsweise dem 1 bis 2-fachen des mittleren Durchmessers.

Die Zu- bzw. Abnahme des Durchmessers kann von 0 bis maximal einem Viertel des mittleren Durchmessers betragen. Bevorzugt liegt Zu- bzw. Abnahme des Durchmessers zwischen einem Achtel und einem Viertel ihres Durchmessers. Besonders bevorzugt ist eine Zu- bzw. Abnahme von einem Sechstel des mittleren Durchmessers. Die Schwankung Durchmessers in Richtung der Längsachse der Wursthülle erfolgt bevorzugt periodisch, wobei die Periode der Durchmesserschwankung zwischen dem 0,5 und dem 3-fachen, vorzugsweise zwischen dem ein- und zweifachen mittleren Durchmesser des Kollagenschlauchs liegt.

Besonders bevorzugt ist eine Ausführungsform bei der sich beide Merkmale, einmal die korkenzieherartige Wendelung der Längsachse um eine gedachte Mittelachse und zum Anderen der in Längsrichtung wechselnde Durchmesser mehr oder weniger stark vorhanden sind.

Es ist nicht erforderlich und auch nicht erwünscht, daß sich die beiden Merkmale der korkenzieherartigen Wendelung und der Durchmesserschwankung in Richtung der Längsachse mit der gleichen Periode wiederholen. Vielmehr ist eine Wursthülle bevorzugt, die zwar beide Merkmale aufweist, jedoch mit unterschiedlicher Periode. Man erhält hierdurch eine Wursthülle mit einem mehr zufällig scheinenden unregelmäßigen Muster von Krümmungen und Durchmesserschwankungen, die einer echten Schweinekrause im Aussehen sehr nahekommen.

Der mittlere Durchmesser der erfindungsgemäßen Wursthülle kann innerhalb gewisser Bereiche schwanken und beträgt z.B. 36 bis 75 mm, vorzugsweise 40 bis 65 mm und insbesondere 47 bis 55 mm. Die mittlere Wandstärke der Hülle beträgt 40 bis 100 µm, vorzugsweise 55 bis 85 µm und insbesondere 60 bis 75 µm.

Die Erfindung betrifft eine Verfahren zur Herstellung einer künstlichen, unregelmäßig geformten Wursthülle aus Kollagen durch Extrusion einer knet- und formbaren Kollagenfasermassse aus chemisch und physikalisch aufgeschlossenem Rinderhautspalt, mittels eines Extruders mit einer Ringdüse, die aus einem inneren Düsenteil mit feststehen dem Kern und Mantel und einem diesern am Austrittsende vorgesetzten äußeren Düstenteil mit entgegengeletzt zu-einander umlaufenden Kern und Mantel besteht, dadurch gekennzeichnet, daß zur Erzielung einer korkenzieherartigen Wendelung der Längsachse um eine gedachte Mittelachse die Bohrung des äusseron Düsenteils bei gleichem Durchmesser wie die Bohrung des feststehenden inneren Düsenteils gegenüber der Mitte der Bohrung des feststehenden Düsenteils versetzt wird und daß zur Erzielung unterschiedlicher Durchmesser in Längsrichtung ein pulsierender, d.h. zeitlich unterschiedlicher Massestrom extrudiert wird. Bei starkem Masseaustritt entsteht ein weiterer und bei schwachem Masseaustritt ein engerer Schlauchquerschnitt.

Die erfindungsgemäß zur Extrusion verwendete Masse hat typisch einen pH-Wert von 2,5 bis 3,2, vorzugsweise von 2,7 bis 2,9 und einen Trockenstoffgehalt von 5,5 bis 15%, vorzugsweise 8 bis 11%. Die Formmasse kann gegebenenfalls Hilfsstoffe wie z.B. Cellulosepulver zur Verbesserung der Reissfestigkeit, Glycerin, Sorbit und/oder Propylenglykol als Weichmacher und Formaldehyd, Glyoxal und/oder Glutaraldehyd als Härtungsmittel enthalten.

Die Erfindung betrifft ferner eine Vorrichtung zur Durchführung des Verfahrens in Form eines Extruders mit einer Ringdùse, die aus einem inneren Düsenteil mit feststehendem Kern und Mantel und einem diesem am Austrittsende vor-gesetzten äusseren Düsenteil mit entgegenge-setzt zueinander umlaufendem Kern und Mantel besteht, die dadurch gekennzeichnet, ist, daß die Bohrung des äusseren Düsenteils bei gleichem Durchmesser wie die Bohrung des feststehenden inneren Düsenteils gegenüber der Mitte der Bohrung des feststehenden Düsenteils versetzt ist. Bevorzugt ist die Bohrung des äusseren Düsenteils um einen Bruchteil des Düsenspalts des inneren Düsenteils versetzt. Die gewünschte Korkenzieherform wird erhalten, indem der Düsenmantel (Hülse) mit der gewünschten, auf die Extrusionsgeschwindigkeit abgestimmten Frequenz umläuft. Zum Zweck des Verstreichens der Masse (Faserorientierung quer zur Strömung) rotiert der Düsenkern mit wesentlich höherer Geschwindigkeit (z.B. der 2 bis 4-fachen Geschwindigkeit) vorzugsweise in Gegenrichtung.

Zweckmäßig werden die Antriebe für Hülse und Kern entkoppelt und vorzugsweise sind für beide völlig getrennt Antriebe Verstreichung der Masse und andererseits die gewünschte Wendelung jeweils mit der optimalen Drehzahl erzielen zu können.

Um eine dem natürlichen Vorbild möglichst angenähertes Aussehen zu erhalten, verlaufen die periodischen Schwankungen des Kalibers und der Steigung der Wendelung nicht synchron, sondern werden mehr zufällig scheinend einander überlagert. Hierzu ist vorgesehen, die Geschwindigkeitsregelungen für die Masseförderpumpe und für die Rotation des exzentrischen Düsenrings, vorzugsweise mittels eines Mikroprozessors mit Zufalls-generator innerhalb zweckmäßiger Grenzen zu variieren.

Beispiel:

Mit einer einzylinderischen Kolbenpumpe mit 24 mm Bohrung und 14,5 mm Hub wurde durch 165 Hübe/min Masse mit 8% Kollagen-Trocken-stoff einem doppeltdrehenden Extruder zuge-führt. Dieser hatte einen Kern von 39 mm Durchmesser und in der Hülse eine Bohrung von 40,7 mm Durchmesser. Die Exzentrizität der Bohrung betrug 0,35 mm. Der Kern rotierte mit 190 U/min und die Hülse gegenläufig mit 110 U/min, wobei Kern undf Hülse um eine gemeinsame Achse rotieren.

Der extrudierte Schlauch wurde durch die zentrale Bohrung des Extruders mit so viel Luft aufgeblasen, daß ein mittlerer Durchmesser von 40 mm entstand. Die Hülle wurde mit ca. 10 m/ min vom Mundstück abgezogen und auf übliche Weise getrocknet, hitzegehärtet und weichgemacht.

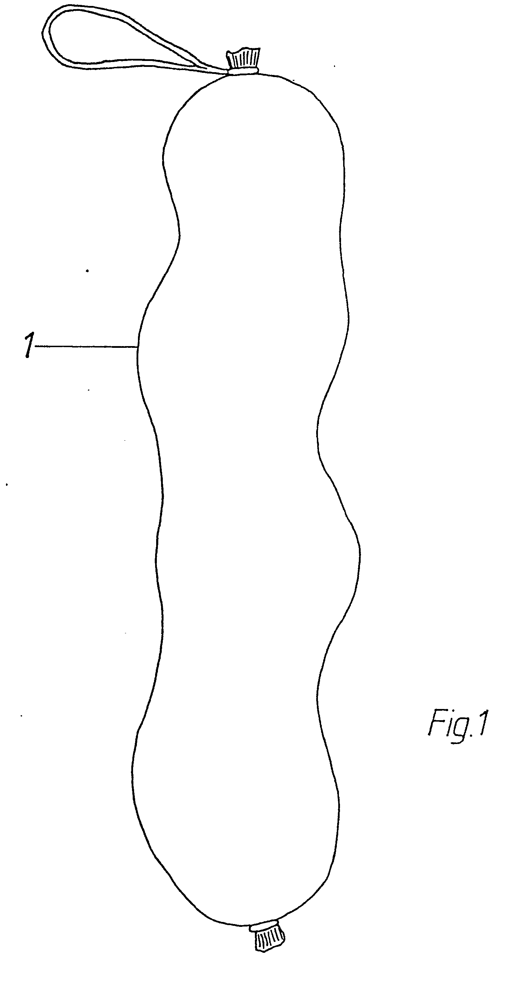

Nach dem Füllen mit Rohwurstbrät zeigte die Wurst eine unregelmäßige Form gemäß Fig. 1.

Die Erfindung wird anhand folgender Zeichnungen näher erläutert:

Figur 1 zeigt eine mit Wurstbrät gefüllte erfindungsgemäße Hülle in der Ansicht (nicht maßstäblich), die nach dem Beispiel hergestellt wurde. Die geschlossene Linie (1) stellt den Umriß der gefüllten unregelmäßigen Hülle dar.

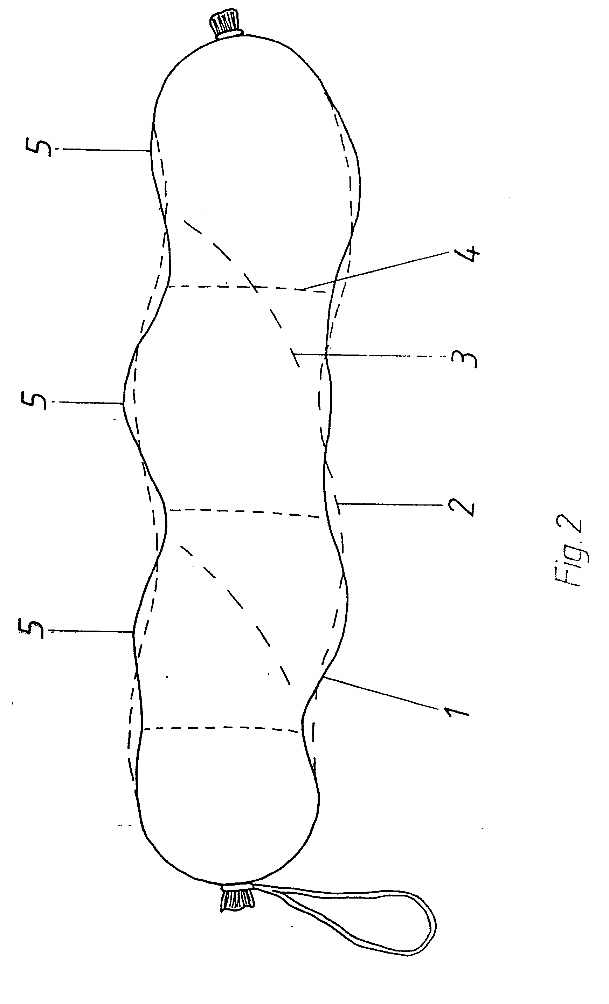

Eine Analyse der Form der erfindungsgemäßen Hülle in Figur 2 zeigt, daß eine Wendelung um die Längsachse der Wurst, dargestellt durch die gestrichelten Linien (2) und (3) und eine An- und Abschwellung des Durchmessers, dargestellt durch die fein gestrichelten Linien (4) an den Stellen der Durchmesserminima und die Markierung der Maxima durch Pfeile (5), einander überlagert sind. Die Frequenz der Anschwellung beträgt das 1,5-fache der Frequenz der Wendelung. Die Zu- bzw. Abnahme des Durchmessers beträgt je eine Achtel, die Exzentrizität der Wendelung ca. 1 Siebentel des Durchmessers.

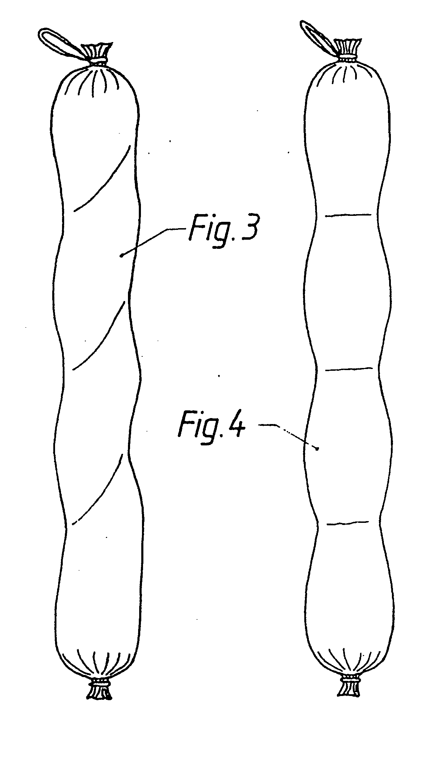

Figur 3 zeigt eine Hülle, die bei pulsatioonsfreier Förderung der Masse allein durch Wendelung entstanden ist, in der Ansicht.

Figur 4 zeigt die Ansicht einer Hülle, die ohne jede Wendelung allein durch pulsierende Förderung der Masse entstanden ist.

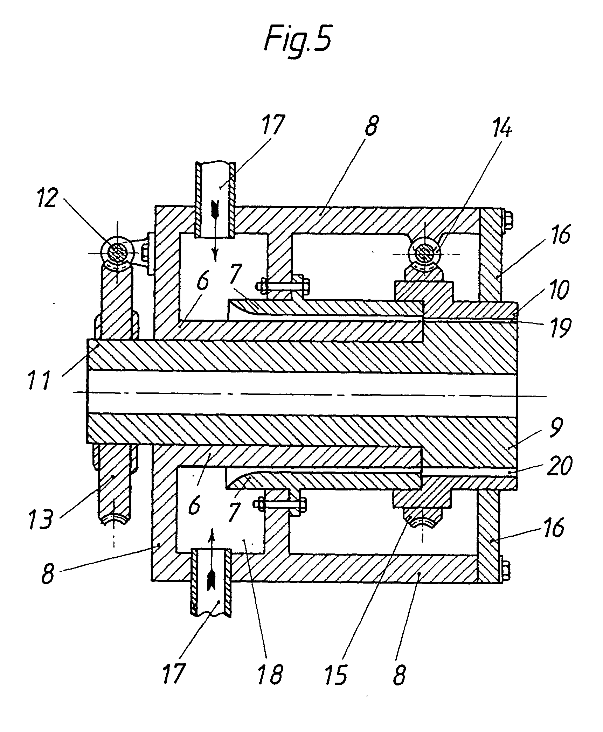

Figur 5 zeigt den erfindungsgemäß modifizierten Extruder im Längsschnitt.

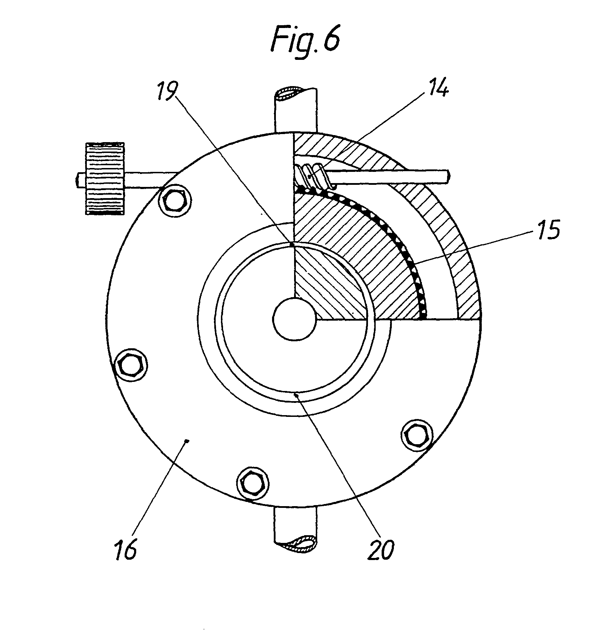

Figur 6 stellt die Vorrichtung in Vorderansicht dar, wobei ein Teil in Höhe des Schneckenradantriebes geschnitten gezeichnet ist.

Der Kern (6) bildet mit dem Ringteil (7) eine feststehende Düse, die einen allseits gleich starken Spalt von mittlerer Spaltweite aufweist und fest im Gehäuse (8) angebracht ist. Dieser feststehenden Düse ist eine zweite drehbare Ringdüse vorgesetzt und zwar derart, daß der Kern (9), der vorteilhaft für das Durchleiten von Luft zum Aufblähen des extrudierten Schlauches durchbohrt ist, die geradlinige Fortsetzung des Kerns (6) bildet. Auf gleiche Art ist auch dem Ringteil (7) ein drehbarer Ringteil (10) vorgesetzt mit der Maßgabe, daß seine Bohrung um einen Bruchteil der Spaltweite des festehenden Düsenteils aus der Mitte versetzt angeordnet ist. Im übrigen hat diese Bohrung den gleichen Durchmesser wie die des feststehenden Düsenrings.

Die Drehung des Kerns (9) erfolgt über die Verlängerung (11) mittels Schnecke (12) und Schneckenrad (13). Ebenso erfolgt der Antrieb des Düsenringes (10) über Schnecke (14) und Schneckenkranz (15). Durch eine geeignete Abstützung — nicht dargestellt — des Düsenringes (10), z.B. an dem Gehäusedeckel (16) wird dafür Sorge getragen, daß er um die Hauptachse des Extruders rotiert. Die Schnecken (12) und (14) werden anabhängig voneinander und gegenläufig angetrieben.

Die Kollagenmasse tritt durch mehrere Rohre (17), die am Umfang des Gehäuses (8) verteilt sind, in den Ringraum (18) eine und passiert den Spalt zwischen den feststehenden Düsenteilen (6) und (7) und tritt dann in den Spalt zwischen dem rotierenden, exzentrisch gebohrten Ringteil (10) ein. Die Masse wird hier auf der Seite des engeren Düsenspaltes (19) etwas abgebremst im Vergleich mit der gegenüber liegenden weiteren Seite (20) des Spaltes. Daher krümmt sich der Schlauch nach der engeren Seite (19). Durch die dauernde Rotation und den Abzug in Richtung der Extruderachse bildet sich eine korkenzieherartige Wendelung des Schlauches aus.

**Patentansprüche**

1. Verfharen zur Herstellung einer künstlichen, unregelmäßig geformten Wursthülle aus Kollagen durch Extrusion einer knet- und formbaren Kollagenfasermasse aus chemisch und physikalisch aufgeschlossenem Rinderhautspalt mittels eines Extruders mit einer Ringdüse, die aus einem inneren Düsenteil mit feststhendem Kern und Mantel und einem diesem am Austrittsende vorgesetzten äußeren Düsenteil mit entgegengesetzt zueinander umlaufendem Kern und Mantel besteht, dadurch gekennzeichet, daß zur Erzielung einer korkenzieherartigen Wendelung der Längsachse der Wursthülle um eine gedachte Mittelachse die Bohrung des ässeren Düsenteils (10) bei gleichem Durchmesser wie die Bohrung des feststehenden inneren Düsenteils gegenüber der Mitte der Bohrung des feststehenden Düsenteils (7) versetzt wird und daß zur Erzielung unterschiedlicher Durchmesser in Längsrichtung der Wursthülle ein pulsierender d.h. zeitlich unterschiedlicher Massestrom extrudiert wird.

2. Verfahren nach Anspruch 1, dadurch gekennzeichnet, daß die Zu- bzw. Abnahme des Durchmessers der Wursthülle zwischen 0 und einem Viertel des mittleren Durchmessers beträgt.

3. Verfahren nach Ansprüchen 1 bis 2, dadurch gekennzeichnet, daß der Abstand ihrer Längsachse von der gedachten Mittelachse zwischen 0 und maximal einem Fünftel ihres mittleren Durchmessers, vorzugsweise zwischen 2 mm und 5 mm liegt.

4. Verfahren nach Ansprüchen 1 bis 3, dadurch gekennzeichnet, daß die Steigung der Wendelung etwa dem 0,5 bis 3-fachen, vorzugsweise dem 1 bis 2-fachen des mittleren Durchmessers entspricht.

5. Verfahren nach einem der Ansprüche 1 bis 4, dadurch gekennzeichnet, daß die Stellen mit größerem und geringerem Durchmesser in axialer Richtung periodisch aufeinander folgen.

6. Verfahren nach Anspruch 5, dadurch gekennzeichet, daß die Periode der Durchmesserschwankung entlang der Längsachse zwischen dem 0,5 und 3-fachen, vorzugsweise zwischen dem ein- und zweifachen mittleren Durchmesser des Kollagenschlauchs beträgt.

7. Verfahren nach einem der Ansprüche 1 bis 6, dadurch gekennzeichet, daß das Zu- und Abnehmen der Durchmesser sowie korkenzieherartige Wendelung der Längsachse um die gedachte Mittelachse in unterschiedlichen Perioden abwechseln.

8. Vorrichtung zur Durchführung des Verfahrens in Form eines Extruders mit einer Ringdüse, die aus einem inneren Düsenteil mit feststehendem Kern (6) und Mantel (7) und einem diesem am Austrittsende vorgesetzten äußeren Düsenteil mit entgegengesetzt zueinander umlaufendem Kern (9) und Mantel (10) besteht, dadurch gekennzeichet, daß die Bohrung des äußeren Düsenteils (10) bei gleichem Durchmesser wie die Bohrung des feststehenden inneren Düsenteils gegenüber der Mitte der Bohrung des feststehenden Düsenteils (7) versetzt ist.

9. Vorrichtung nach Anspruch 8, dadurch gekennzeichet, daß für Extruderhülse und -kern jeweils getrennte Antriebe vorgesehen sind.

10. Vorrichtung nach einem der Ansprüche 8 bis 9, dadurch gekennzeichet, daß die Geschwindigkeitsregelungen für die Masseförderpumpe und für die Rotation des exzentrischen Düsenteils über einen Zufallsgenerator steuerbar sind.

11. Vorrichtung nach Ansprüchen 8 bis 10, dadurch gekennzeichet, daß eine einen pulsierenden Massestrom erzeugende Fördereinrichtung, vorzugsweise eine einzylindrische Kolbenpumpe dem Extruder vorgeschaltet ist.

## Revendications

1. Procédé de fabrication d'un boyau à saucisse artificiel en collagène de forme irrégulière par extrusion d'une masse pétrissable et moulable de fibres de collagène de croûtes de peau de bœuf désagrégées chimiquement et physiquement à l'aide d'une extrudeuse à tuyére cylindrique composée d'une partie de tuyère intérieure à noyau et enveloppe fixes et d'une partie de tuyére extérieure placée devant cette dernière, à l'extrémité de sortie, à noyau et enveloppe à rotation en sens opposé l'un à l'autre, caractérisé en ce que, pour obtenir une forme hélicoïdale en tire-bouchon de l'axe longitudinal du boyau à saucisse autour d'un axe médian imaginiaire, l'alésage de la partie du tuyère extérieure (10), à diamètre égal à l'alésage de la partie du tuyère intérieure fixe, est décalé par rapport au centre de l'alésage de la partie de tuyère fixe (7) et en ce que, pour obtenir des diamètres différents dans le sens longitudinal du boyau à saucisse, il est extrudé un flux de masse par pulsations, c'est-à-dire différent dans le temps.

2. Procédé selon la revendication 1, caractérisé en ce que l'augmentation ou la diminution du diamètre du boyau à saucisse se situe entre 0 et un quart du diamètre moyen.

3. Procédé selon les revendications 1 et 2, caractérisé en ce que la distance entre son axe longitudinal et l'axe médian imaginaire se situe entre 0 et maximum un cinquième de son diamètre moyen, de préférence entre 2 mm et 5 mm.

4. Procédé selon les revendications 1 à 3, caractérisé en ce que la pente de la spirale correspond à environ 0,5 à 3 fois, de préférence de 1 à 2 fois le diamètre moyen.

5. Procédé selon l'une des revendications 1 à 4, caractérisé en ce que les endroits à grand et petit diamètre se succèdent périodiquement dans le sens axial.

6. Procédé la revendication 5, caractérisé en ce que la période de variation du diamètre dans l'axe longitudinal se situe entre 0,5 et 3 fois, de préférence entre une et deux fois le diamètre moyen du boyau en collagène.

7. Procédé selon l'une des revendications 1 à 6, caractérisé en ce que l'augmentation ou la diminution du diamètre ainsi que la forme hélicoïdale en tire-bouchon de l'axe longitudinal autour de l'axe médian imaginaire s'alternent suivant des périodes distinctes.

8. Dispositif pour la mise en œuvre du procédé sous forme d'une extrudeuse à tuyère cylindrique composée d'une partie du tuyère intérieure à noyau (6) et enveloppe (7) fixes et d'une partie de tuyère extérieure placée à l'avant de cette dernière, à l'extrémité de sortie, à noyau (9) et enveloppe (10) à rotation en sens opposé l'un à l'autre, caractérisé en ce que l'alésage de la partie de tuyère extérieure (10), à diamètre égal à l'alésage de la partie de tuyère intérieure fixe, est décalé par rapport au centre de l'alésage de la partie de tuyère fixe (7).

9. Dispositif selon la revendication 8, caractérisé en ce qu'il est prévu des entraînements séparés pour l'enveloppe et le noyau de l'extrudeuse.

10. Dispositif selon l'une des revendications 8 ou 9, caractérisé en ce que les réglages de vitesse pour la pompe de refoulement de masse et pour la rotation de la partie de tuyére excentrique peuvent être commandés par un générateur à accès aléatoire.

11. Dispositif selon les revendications 8 à 10, caractérisé en ce qu'il est installé un dispositif de transport engendrant un flux de masse à pulsations, de préférence une pompe à piston à un cylindre, devant l'extrudeuse.

## Claims

1. A process for the production of an artificial, irregularly shaped sausage casing of collagen by extrusion of a kneadable and formable collagen fibre mass from chemically and physically opened-up split hide by means of extrusion havinag a tubular die consisting of an inner die member having a stationary core and jacket and an outer die member being place before the outlet end of the inner die, said outer die having counterrotating core and jacket, characterized in that the bore of the outer die member (10) is displaced opposite the middle of the bore of the stationary die member (7) thereby maintaining the same diameter as the bore of the stationary inner die member in order to obtain a corkscrew-shaped helix of the longitudinal axis of the sausage casing around an imaginary midline and that an intermittent mass flow, i.e., different with respect to time, is extruded in order to obtain different diameters in the longitudinal direction of the sausage casing.

2. The process according to claiam 1, characterized in that the increase and decrease of the diameter of the sausage casing is between 0 and a quarter of the mean diameter.

3. The process according to claims 1 to 2, characterized in that the distance of the longitudinal axis from the imaginary midline is between 0 and maximal a fifth of the mean diameter, preferably between 2 mm and 5 mm.

4. The process according to claim 1 to 3, characterized in that the incline of the helix approximately corresponds to 0.5 to three times, preferably to one to two times the mean diameter.

5. The process according to claims 1 to 4, characterized in that the places of larger or smaller diameters succeed one another in the axial direction periodically.

6. The process according to claim 5, characterized in that the period of diameter variation along the longitudinal axis is between 0.5 and three times, preferably between one and two times the mean diameter of the collagen tube.

7. The process according to claims 1 to 6, characterized in that the increase and the decrease of the diameter as well as the spiral helix of the longitudinal axis around the imaginary midline alternate in different periods.

8. A device for carrying out the process, having the form of an extruder with a tubular die consisting of an inner die member with stationary core (6) and jacket (7) and an outer die member which is placed before the outlet end of the inner die, which outer die has a core (9) and jacket (10) both rotating contrary to each other, characterized in that the bore of the outer die member (10) is displaced opposite of the middle of the bore of the stationary die member (7) thereby maintaining the same diameter as the bore of the stationary inner die member.

9. The device according to claim 8, characterized in that separate drives are provided for both the extruder tube and the extruder core.

10. The device according to claims 8 to 9, characterized in that speed controls for the mass conveying pump and for the rotation of the excentric die member are controllable by a random generator.

11. The device according to claims 8 to 10, characterized in that a conveying device creating an intermittent mass flow, preferably a single-cylinder piston pump is placed before the extruder.

1

Fig.1

Fig. 2

EP 0 183 153 B1

Fig.3

Fig.4

Fig.5

EP 0 183 153 B1

Fig.6